# EUROPÄISCHE PATENTSCHRIFT

(11) **EP 1 654 471 B1**
(45) Veröffentlichungstag und Bekanntmachung des Hinweises auf die Patenterteilung: **26.11.2008**
(21) Anmeldenummer: 04762611.4
(22) Anmeldetag: 05.08.2004
(51) Int. Cl.: F16C 33/12

(54) **SCHICHTVERBUNDWERKSTOFF FÜR GLEITLAGER, HERSTELLUNG UND VERWENDUNG**
LAYERED COMPOSITE MATERIAL FOR PLAIN BEARINGS, PRODUCTION AND USE THEREOF
MATERIAU COMPOSITE LAMINAIRE POUR PALIERS LISSES, FABRICATION ET UTILISATION ASSOCIEES

(30) Priorität: 12.08.2003 DE 10337029
(43) Veröffentlichungstag der Anmeldung: 10.05.2006
(73) Patentinhaber: Federal-Mogul Wiesbaden GmbH, 65201 Wiesbaden (DE)
(72) Erfinder: ADAM, Achim, 64569 Nauheim (DE); STASCHKO, Klaus, 65232 Taunusstein-Seitzenhahn (DE)
(74) Vertreter: Fuchs
(86) Internationale Anmeldenummer: PCT/DE2004/001766
(87) Internationale Veröffentlichungsnummer: WO 2005/015037

(56) Entgegenhaltungen:
- EP-A- 1 113 180
- DE-A- 3 719 789
- DE-A- 3 727 591
- DE-A- 19 728 777
- DE-A- 19 754 221

## Beschreibung

Die Erfindung betrifft einen Schichtverbundwerkstoff, insbesondere für Gleitlager oder Buchsen, mit einer Trägerschicht, einer Lagermetallschicht aus einer Kupferlegierung oder einer Aluminiumlegierung, einer Nickel-Zwischenschicht und einer Gleitschicht. Ferner betrifft die Erfindung ein Verfahren zur Herstellung dieses Schichtverbundwerkstoffes, die Herstellung von Gleitlagern oder Buchsen sowie Verwendungen des Schichtverbundwerkstoffes.

Klassische Schichtverbundwerkstoffe mit dem Aufbau Stahlrücken als Trägerschicht, Bleibronze als Lagermetallschicht und Gleitschicht aus Blei-Zinn-Kupfer, wie sie beispielsweise in Glyco-Ingenieurberichte 1/91 beschrieben werden, haben sich durch hohe Zuverlässigkeit und mechanische Belastbarkeit bewährt. Die Gleitschicht wird dabei galvanisch abgeschieden. Es handelt sich bei ihr um eine multifunktionale Schicht, in die Fremdpartikel eingebettet werden können, die als Korrosionsschutz dient, die Notlaufeigenschaften zeigt und insbesondere für den Einlauf bzw. die Anpassung der Gleitpartner geeignet ist.

Auch die Lagermetallschicht weist hinreichende Notlaufeigenschaften für den Fall auf, dass die Gleitschicht zumindest stellenweise völlig abgetragen ist.

Die klassischen Schichtverbundwerkstoffe weisen eine Gleitschicht auf Bleibasis auf. Eine gängige Legierung ist z.B. PbSn10Cu2. Derartige Gleitschichten weisen niedrige Härten um 12 - 15 HV (Vicker's Härte) auf. Daher besitzen sie gute Einbettfähigkeit und sind fressunempfindlich. Aus Arbeitsschutz- und Umweltschutzgründen ist es allerdings wünschenswert, das Schwermetall Blei durch andere geeignete Werkstoffe zu ersetzen.

Ein Ansatz besteht darin, in hoch belasteten Lagerungen harte Schichten als Gleitschichten einzusetzen. Z.B. werden durch PVD-Verfahren (physical vapor deposition) Aluminium-Zinn-Schichten mit Härten um 80 HV abgeschieden. Diese sind bleifrei, allerdings in der Herstellung sehr teuer. Derartige Lager sind sehr verschleißbeständig. Sie besitzen aber kaum Einbettfähigkeit und werden daher meist mit weichen bleihaltigen Schichten als Gegenschale kombiniert. Allerdings ist es wünschenswert, auch bei Gegenschalen Blei durch andere Werkstoffe zu ersetzen.

Es ist versucht worden, reines Zinn als Gleitfläche zu verwenden. Mit einer Härte von ungefähr 10 HV ist es allerdings noch weicher als die konventionellen Bleilegierungen und vermag daher die Belastungen, die z.B. in Kurbelwellenhaupt- und Pleuellagern entstehen, nicht aufzunehmen.

In der DE 197 28 777 A1 wird ein Schichtverbundwerkstoff für Gleitelemente beschrieben, dessen Gleitschicht aus einer bleifreien, Zinn und Kupfer aufweisenden Legierung besteht, wobei der Kupferanteil 3 - 20 Gew.-% und der Zinnanteil 70 - 97 Gew.-% beträgt. Diese Gleitschicht wird mit Hilfe eines methylsulfonsauren Elektrolyten mit Kornfeinungszusätzen galvanisch abgeschieden. Die so erzeugte Gleitschicht besitzt die Eigenschaft ternärer Bleibasis-Gleitschichten. In der DE 197 28 777 A1 wird ferner vorgeschlagen, zur weiteren Verbesserung der Verschleißfestigkeit im Elektrolytbad dispergierte Hartstoffteilchen vorzusehen, die in die Schicht eingebaut werden. Dies ist aber mit zusätzlichem Aufwand und Kosten verbunden. Zwischen dem Lagermetall und der Gleitschicht kann eine 1 - 3 µm dicke Nickelschicht zusammen mit einer 2 - 10 µm dicken Nickel-Zinnschicht als Diffusionssperrschicht vorgesehen sein.

In der DE 197 54 221 A1 ist ein Schichtverbundwerkstoff mit einer Gleitschicht mit 3 - 30 Gew.-% Kupfer, 60 - 97 Gew.-% Zinn und 0,5 - 10 Gew.-% Kobalt offenbart. Dadurch wird eine weitere Erhöhung der mechanischen Belastbarkeit erreicht und eine Versprödung der Bindungsschicht zwischen Gleitschicht und Nickeldiffusionssperrschicht verhindert. Durch das Kobalt wird die Diffusionsneigung des Zinns zum Nickel vermindert. Durch die Zulegierung des Kobalts wird allerdings der galvanische Abscheidungsprozess komplexer, was die Prozesssicherheit verringert. Im übrigen kann wie in der DE 197 28 777 A1 die 1 - 3 µm dicke Nickelschicht mit einer 2 - 10 µm dicken Nickel-Zinnschicht als Diffusionssperre kombiniert werden.

In der EP 1 113 180 A2 wird ein Schichtverbundwerkstoff für Gleitlager beschrieben, dessen Gleitschicht eine Zinnmatrix besitzt, in die Zinn-Kupfer-Partikel eingelagert sind, die aus 39 - 55 Gew.-% Kupfer und Rest Zinn bestehen. Charakteristisch für den Schichtverbundwerkstoff ist außerdem, dass nicht nur eine Zwischenschicht aus Nickel einer Dicke von 1 - 4 µm vorgesehen ist, sondern zwischen der Nickel-Zwischenschicht und der Gleitschicht eine zweite Zwischenschicht einer Dicke 2 - 7 µm aus Zinn und Nickel angeordnet ist. Mittels den Zwischenschichten aus Nickel und Zinn-Nickel wird ein sich selbst an die Belastung anpassendes System erzeugt, bei dem sich je nach thermischen Bedingungen durch ein Wachstum der Zinn-Nickel-Schicht die Belastbarkeit erhöht. Aus diesem Schichtverbundwerkstoff lassen sich Produkte für höhere Belastungen in modernen, hoch aufgeladenen Dieselmotoren herstellen. Durch die zusätzliche Schicht ist aber ein höherer prozesstechnischer Aufwand bei der Herstellung des Schichtverbundwerkstoffes und damit höhere Kosten verbunden.

Aus der DE 100 32 624 A1 ist ein Gleitlager aus einem Lagermetall und einer Laufschicht aus Bismut oder Bismutlegierung bekannt, die verbesserte Kompatibilität und Ermüdungsfestigkeit aufweisen soll. Ausschlaggebend ist eine besondere Vorzugsorientierung der Wismutkristalle, die gegenüber einer statistischen Orientierung der Kristalle und gegenüber Einkristallen eine verringerte Sprödigkeit und verbesserte Anpassungsfähigkeit besitzen soll. Als mögliche Legierungen wird auf Legierungen des Bismuts mit weichen Materialien wie Zinn, Indium, Antimon und dergleichen hingewiesen. Diese beinhalten jedoch die Gefahr, dass bei Inhomogenitäten der Verteilung dieser Materialien in der Matrix, d.h. bei Konzentrationsschwankungen, niedrig schmelzende Eutektika gebildet werden. Daher sollen die Zusätze auf maximal 5 Gew.-% begrenzt werden. In der Praxis hat sich allerdings herausgestellt, dass die Eutektikumsbildung sogar bereits unterhalb der 5 Gew.-%- Grenze auftritt.

Aufgabe der vorliegenden Erfindung ist es, die Nachteile des Standes der Technik zu überwinden.

Gelöst wird die Erfindung durch einen Schichtverbundwerkstoff gemäß Anspruch 1. Ferner wird die Aufgabe gelöst durch Herstellungsverfahren gemäß Anspruch 9 und 12 sowie Verwendungen gemäß den Ansprüchen 15 und 16.

Es hat sich herausgestellt, dass das Vorhandensein von weiteren Phasen aus Kupfer und/oder Silber in der Bismutmatrix die Verschleißfestigkeit erhöht. Obwohl die Gleitschicht kein Blei enthält, weist sie eine vergleichbare bis bessere spezifische Belastbarkeit und Verschleißeigenschaften auf als bei herkömmlichen Schichten auf Bleibasis. Die Gleitschicht des erfindungsgemäßen Schichtverbundwerkstoffes ist anpassungsfähig und zeigt eine hohe Einbettfähigkeit für Schmutzpartikel. Besonders vorteilhaft ist, dass sich keine niedrig schmelzenden Eutektika in der Gleitschicht ausbilden.

Genauere Untersuchungen haben außerdem gezeigt, dass sich Lager aus diesem Schichtverbundwerkstoff nach dem Einlauf auf der zunächst noch relativ weichen Gleitschicht durch die Erwärmung im Betrieb selbst stabilisieren und eine höherfeste Oberfläche ausbilden. Dies geschieht durch die Ausbildung einer Bismut und Nickel enthaltenden Schicht durch Diffusion des Nickels in die im Wesentlichen aus Bismut bestehende Gleitschicht. Die daraus resultierende Gleitfläche ist hochbelastbar und verschleißfest. Indem eine mindestens ca. 4 µm dicke Nickelschicht vorgehalten wird, wird gewährleistet, dass die Nickelschicht auch nach der Einlaufphase nicht vollständig umgesetzt wird.

Die Metalle Kupfer und Silber können einzeln oder in Kombination in der Bismutmatrix vorhanden sein. Ihr Gesamtanteil sollte zwischen ca. 0,5 und 20 Gew.-% betragen. Vorteilhafterweise sollte der Gesamtgehalt von Kupfer und/oder Silber zwischen ca. 2 und 8 Gew.-% betragen.

Die Gleitschicht sollte vorteilhafterweise eine Schichtdicke von ca. 5 - 25 µm aufweisen. Besonders bevorzugt sind Schichtdicken von ca. 4 - 6 µm für die Nickelzwischenschicht und von ca. 6 - 14 µm für die Bismutgleitschicht. Bei Schichtdicken in diesen Größenordnungen wird gewährleistet, dass weder die Nickelschicht noch die Gleitschicht auf Bismutbasis diffusionsbedingt vollständig umgesetzt werden. Dies würde zu Haftungsproblemen bzw. ungewollten Wechselwirkungen zwischen dem in der Gleitschicht enthaltenen Bismut und dem Lagermetall führen, z.B. bei blei- und zinnhaltigem Lagermetall zu Eutektikumsbildung mit sehr niedrigen Schmelzpunkten.

Vorteilhafterweise handelt es sich bei den Lagermetallen um Kupfer-Aluminium-, Kupfer-Zinn-, Kupfer-Zinn-Blei-, Kupfer-Zink-, Kupfer-Zink-Silizium-, Kupfer-Zink-Aluminium-, Kupfer-Aluminium-Eisen- oder Kupfer-Zinklegierungen. Bevorzugt sind Lagermetalle auf Kupfer- oder Aluminiumbasis, d.h. deren Kupfer- oder Aluminiumanteil zwischen 50 und 95 Gew.-% liegt.

Erfindungsgemäß wird der Schichtverbundwerkstoff dadurch hergestellt, dass auf einen Verbund aus Träger-, Lagermetall- und Nickelzwischenschicht die Gleitschicht aus einem methansulfonsauren Elektrolyten, wie er in Anspruch 9 spezifiziert ist, abgeschieden wird, wobei der Elektrolyt ein nicht ionisches Netzmittel und ein eine Karbonsäure beinhaltendes Kornverfeinerungsmittel enthält. Als Antioxidationsmittel ist im Elektrolyten Resorcin vorhanden. Soll die Gleitschicht auch Silber enthalten, muss Thioharnstoff als Komplexbildner beigefügt werden. Thioharnstoff verschiebt die Abscheidungspotentiale dahingehend, dass Silber und Bismut zusammen abgeschieden werden können.

Als Kornverfeinerer wird vorzugsweise ein Mittel auf der Basis von einem Acrylsäurederivat und Alkylarylpolyglacolether verwendet. Unter der Bezeichnung Zusatz L, Cerolyt BMM/T wird ein derartiger Kornverfeinerer von der Firma Enthone OMI vertrieben.

Das nichtionische Netzmittel ist vor allen Dingen bei kupferhaltigen Gleitschichten von Bedeutung. Es soll unkontrollierte Kupferabscheidungen insbesondere auf dem Lagerrücken verhindern. Besonders bewährt haben sich nichtionische Netzmittel auf der Basis von Arylpolyglycolether und/oder Alkylarylpolyglycolether. Derartige nichtionische Netzmittel werden von der Firma Enthone OMI unter der Bezeichnung Zusatz N, Cerolyt BMM-T vertrieben.

Die erfindungsgemäßen Gleitlager oder Buchsen weisen den großen Vorteil auf, dass sich beim Einlauf unter den Betriebsbedingungen eine Interdiffusionsschicht aus Bismut und Nickel ausbildet, die die Verschleißfestigkeit erhöht. Es besteht die Möglichkeit, das Entstehen der Interdiffusionsschicht durch künstliches Altern der Gleitlager oder Buchsen zu fördern. Besonders bewährt hat sich dabei eine Wärmebehandlung bei ca. 150° -170°C, die sich über mehrere Stunden bis einige Tage erstreckt.

Der erfindungsgemäße Schichtverbundwerkstoff eignet sich besonders zur Herstellung von Kurbelwellenhauptlagern und von Pleuellagern, insbesondere für das große Pleuelauge.

Die Erfindung soll anhand eines Beispieles und von Figuren näher erläutert werden.

Es zeigen:
- Figur 1: einen Schnitt durch die Lagermetallschicht, Nickelzwischenschicht und Gleitschicht eines erfindungsgemäßen Schichtverbundwerkstoffes;
- Figur 2: einen Schnitt durch ein aus dem erfindungsgemäßen Schichtverbundwerkstoff bestehendes Lager nach der Einlaufphase und
- Figur 3: die an dem Lager gemäß Figur 2 im Bereich III-III durch energiedispersive Röntgenanalyse ermittelte Elementverteilung.

Auf ein vorgefertigtes Lager aus einem Verbund aus Stahl und einem Lagermetall aus CuPb22Sn wird nach entsprechender Vorbehandlung eine Nickeldiffusionssperrschicht aus einem Watt's Nickelelektrolyten aufgebracht.

Auf die so erzeugte Nickelzwischenschicht wird die Gleitschicht auf Bismutbasis galvanisch abgeschieden. Dafür wird folgendes Elektrolytsystem auf wässriger Basis eingesetzt:

| | |
|---|---|
| Bi³⁺ als Bismutmethansulfonat | 30 - 40 g/l |
| Cu²⁺ als Kupfermethansulfonat | 1 - 5 g/l |
| Ag⁺ als Silbermethansulfonat | 0,1 - 2 g/l |
| Methansulfonsäure | 150 - 200 g/l |
| Zusatz "N" (Cerolyt BMM-T) | 50 - 70 g/l |
| Zusatz "L" (CeroJyt BMM-T) | 10 - 20 g/l |
| Resorcin | 2 - 3 g/l |
| Thioharnstoff | 30 - 150 g/l |

Bei Weglassen von Silbermethansulfonat sollte auch der Thioharnstoff weggelassen werden.

Als Anodenmaterial kommt Bismut zum Einsatz. Die Badtemperatur zur Abscheidung der Gleitschicht liegt bei 15 - 40°C. Als Stromdichte werden 1,5 - 4 x 10⁻² A/m² eingesetzt. Die Distanz Anode zu Kathode beträgt maximal 350 mm. Das Oberflächenverhältnis Anode zu Kathode sollte im Wesentlichen bei 1:1 (+/- 10%) liegen.

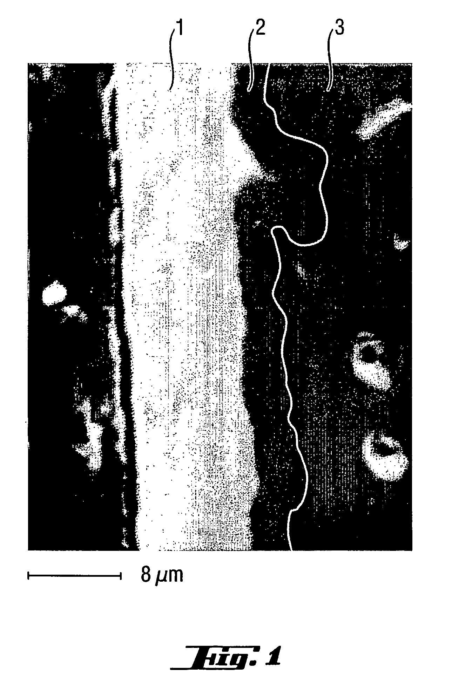

Die Figur 1 zeigt die Schichtstruktur des wie oben beschrieben unter Weglassen von Silbermethansulfonat und Thioharnstoff erhaltenen Schichtverbundwerkstoffes als Schnittbild. Mit 1 ist dabei die Gleitschicht aus Kupfer-Bismut einer Dicke von 10,3 µm bezeichnet, mit 2 die Nickel-Zwischenschicht einer Dicke von 4,2 µm und mit 3 das Lagermetall aus CuPb22Sn.

Dabei ist der Grenzverlauf zwischen den beiden Schichten 2 und 3 zur deutlicheren Erkennung mit einer weißen Linie gekennzeichnet.

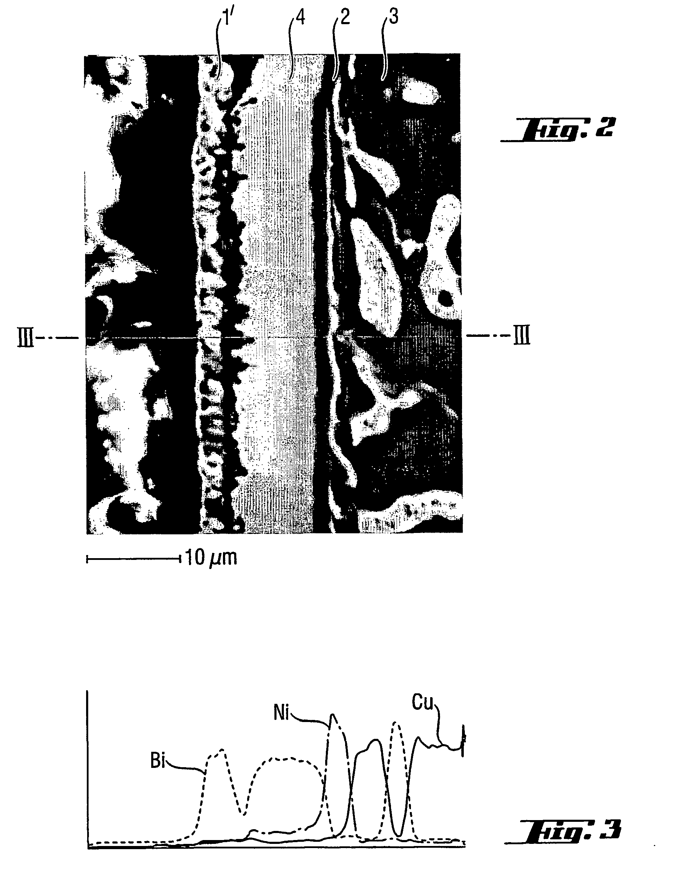

In Figur 2 ist ein Lager aus dem in Figur 1 gezeigten Schichtverbundwerkstoff nach Einstellung des Betriebszustandes, d.h. nach der Einlaufphase als Schnittbild gezeigt. Dazu wurde das Lager 500 h lang bei 150°C wärmebehandelt. Durch Diffusion ist die mit 4 bezeichnete Bismut-Nickel-Schicht einer Dicke von 8,5 µm entstanden, die zu einer belastbareren und verschleißfesteren Gleitfläche führt. Dass es sich um eine Bismut-Nickel-Schicht handelt, wird durch die in Figur 3 dargestellten Ergebnisse einer energiedispersiven Röntgenanalyse bestätigt. Die Abstände auf der X-Achse stimmen mit den entsprechenden Schichtdicken im Bereich III-III der Figur 2 überein. Die Gleitschicht 1' und die Nickelschicht 2 haben nun geringere Dicken von 3,6 µm respektive 2,4 µm.

Zur Bewertung der Leistungsfähigkeit von Lagern, die aus dem erfindungsgemäßen Schichtverbundwerkstoff hergestellt werden, wurden Underwood-Tests durchgeführt. Hierbei rotiert eine Welle mit Exzentergewichten in starr montierten Pleuelstangen. Die Lagerung in den Pleuelstangen wird durch die Prüflager gebildet. Die Prüflager haben eine Wanddicke von 1,4 mm und einen Durchmesser von 50 mm. Über die Lagerbreite wird die spezifische Belastung eingestellt. Die Drehzahl beträgt 4000 Umdrehungen/min. Es wurden die Gleitschichtermüdung und der Verschleiß nach 250 h Dauerlauf gemessen. Die in diesem Test erzielten Ergebnisse sind in Tabelle 1 aufgeführt (Beispiel-Nrn. 5 - 8). Zum Vergleich sind auch die Werte angegeben, die mit Werkstoffen nach dem Stand der Technik (Beispiele 1 - 4) erreicht werden.

Wie sich den in Tabelle 1 aufgeführten Ergebnissen entnehmen lässt, sind die Lager aus erfindungsgemäßem Schichtverbundwerkstoff den herkömmlichen Lagern mit einer Gleitschicht auf Bleibasis bezüglich Gleitschichtermüdung, Verschleiß und maximaler Last bis zum Totalverschleiß deutlich überlegen. Lager mit erfindungsgemäß dicker Nickel-Zwischenschicht weisen bei gleicher Deckschicht gegenüber solchen mit dünnerer Nickel-Zwischenschicht eine deutlich höhere Belastungsgrenze auf (vgl. Beispiele 4,5) Durch zusätzliche Verwendung von Silber und Kupferzusätzen wird gegenüber reinen Bismutgleitschichten (Beispiele 5-8) die Verschleißfestigkeit signifikant verbessert

**Tabelle 1**

| | **Stand der Technik** | | | | **erfindungsgemäß** | | | |
|---|---|---|---|---|---|---|---|---|
| **Bsp.-Nr.** | 1 | 2 | 3 | 4 | 5 | 6 | 7 | 8 |
| **Zusammensetzung** | *PbSn5Cu2* | *PbSn10Cu5* | *PbSn14Cu8* | *Bi* | *Bi* | *BiCu3* | *BiAg5* | *Bi Cu2Ag2* |
| **Dicke der Ni- Schicht in µm** | 1 | 2 | 1,5 | 1,5 | 5 | 4,5 | 6 | 5 |
| **max. Last in MPa ohne Gleitschichtermüdung** | 52,5 | 60 | 65 | 50 | 75 | 77,5 | 80 | 80 |
| **Verschleiß in µm bei 60MPa** | 15 | 11 | 9 | 8 | 3 | 2 | 2 | 3 |
| **max. Last in MPa bis Totalverschleiß der Gleitschicht** | 60 | 67,5 | 80 | 75 | 82,5 | 92,5 | 95 | 95 |

## Patentansprüche

1. Schichtverbundwerkstoff, insbesondere für Gleitlager oder Buchsen, mit einer Trägerschicht, einer Lagermetallschicht (3) aus einer Kupferlegierung oder einer Aluminium-Legierung, einer Nickel-Zwischenschicht (2) und einer Gleitschicht (1), **dadurch gekennzeichnet, dass** die Gleitschicht (1) aus ca. 0 - 20 Gew.-% Kupfer und/oder Silber und Rest Bismut besteht und die Schichtdicke der Nickelschicht mehr als 4 µm beträgt.

2. Schichtverbundwerkstoff nach Anspruch 1, **dadurch gekennzeichnet, dass** die Gleitschicht (1) mindestens ca. 0,5 Gew.-% Kupfer und/oder Silber aufweist.

3. Schichtverbundwerkstoff nach Anspruch 1 oder 2, **dadurch gekennzeichnet, dass** die Gleitschicht (1) aus ca. 2 - 8 Gew.-% Kupfer und/oder Silber und Rest Bismut besteht.

4. Schichtverbundwerkstoff nach einem der Ansprüche 1 bis 3, **dadurch gekennzeichnet, dass** die Schichtdicke der Gleitschicht (1) ca. 5 - 25 µm beträgt.

5. Schichtverbundwerkstoff nach einem der Ansprüche 1 bis 4, **dadurch gekennzeichnet, dass** die Schichtdicke der Gleitschicht (1) ca. 6 - 14 µm beträgt.

6. Schichtverbundwerkstoff nach einem der Ansprüche 1 bis 5, **dadurch gekennzeichnet, dass** die Schichtdicke der Nickelschicht (2) ca. 4 - 6 µm beträgt.

7. Schichtverbundwerkstoff nach einem der Ansprüche 1 bis 6, **dadurch gekennzeichnet, dass** die Lagermetallschicht (3) aus einer Kupfer-Aluminium, Kupfer-Zinn, Kupfer-Zinn-Blei, Kupfer-Zink, Kupfer-Zink-Silizium, Kupfer-Zink-Aluminium, Aluminium-Zink oder Kupfer-Aluminium-Eisen-Legierung besteht.

8. Schichtverbundwerkstoff nach einem der Ansprüche 1 bis 7, der einem Alterungsprozess unterworfen wurde und zwischen der Nickel-Zwischenschicht und der Gleitschicht eine Interdiffusionsschicht aus im wesentlichen Bismut und Nickel aufweist.

9. Verfahren zur Herstellung des Schichtverbundwerkstoffes nach einem der Ansprüche 1 bis 8 durch galvanisches Abscheiden, bei dem die Gleitschicht aus einem Elektrolytsystem auf wässriger Basis folgender Zusammensetzung abgeschieden wird:
| | |
|---|---|
| Bismutmethansulfonat | 20 - 100 g/l |
| Kupfermethansulfonat | 0,1 - 30 g/l und/oder |
| Silbermethansulfonat | 0,1 - 2 g/l |
| Methansulfonsäure | 80 - 250 g/l |
| nichtionisches Netzmittel | 20 - 100 g/l |
| Kornverfeinerer | 5 - 40 g/l |
| Resorcin bei Zugabe von Silbermethansulfonat zusätzlich | 1 - 4 g/l |
| Thioharnstoff | 30 - 150 g/l. |

10. Verfahren nach Anspruch 9, **dadurch gekennzeichnet, dass** der Kornverfeinerer auf Basis eines Acrylsäurederivat und Alkylarylpolyglycolether ist.

11. Verfahren nach Anspruch 9 oder 10, **dadurch gekennzeichnet, dass** das nichtionische Netzmittel auf Arylpolyglycolether und/oder Alkylarylpolyglycolether basiert.

12. Herstellung von Gleitlagern oder Buchsen mit folgenden Schritten:
Aufbringen einer Kupferlegierung oder einer Aluminiumlegierung als Lagermetallschicht auf eine Trägerschicht;
Vereinzeln und Umformen des Schichtverbundwerkstoffes
Aufbringen einer Nickel-Zwischenschicht auf die Lagermetallschicht;
galvanisches Abscheiden einer Gleitschicht auf die Nickel-Zwischenschicht gemäß dem Verfahren nach Anspruch 9 bis 11;

13. Herstellung nach Anspruch 12, **dadurch gekennzeichnet, dass** die Gleitlager oder Buchsen mehrere Stunden bis einige Tage wärmebehandelt werden.

14. Herstellung nach Anspruch 13, **dadurch gekennzeichnet, dass** die Temperatur bei der Wärmebehandlung 150-170°C beträgt

15. Verwendung des Schichtverbundwerkstoffes nach Anspruch 1 bis 8 als Kurbelwellenhauptlager.

16. Verwendung des Schichtverbundwerkstoffes nach Anspruch 1 bis 8 als Pleuellager, insbesondere im großen Auge des Pleuels.

## Claims

1. Layered composite material, in particular for plain bearings or bushes, with a backing layer, a bearing metal layer (3) of a copper alloy or an aluminium alloy, a nickel intermediate layer (2) and an overlay (1), **characterised in that** the overlay (1) consists of approximately 0 - 20 wt.% copper and/or silver and the remainder bismuth, and the layer thickness of the nickel layer is more than 4 µm.

2. Layered composite material according to Claim 1, **characterised in that** the overlay (1) consists of at least approximately 0.5 wt.% copper and/or silver.

3. Layered composite material according to Claim 1 or 2, **characterised in that** the overlay (1) consists of approximately 2 - 8 wt.% copper and/or silver and the remainder bismuth.

4. Layered composite material according to any one of Claims 1 to 3, **characterised in that** the layer thickness of the overlay (1) is approximately 5 - 25 µm.

5. Layered composite material according to any one of Claims 1 to 4, **characterised in that** the layer thickness of the overlay (1) is approximately 6 - 14 µm.

6. Layered composite material according to any one of Claims 1 to 5, **characterised in that** the layer thickness of the nickel layer (2) is approximately 4 - 6 µm.

7. Layered composite material according to any one of Claims 1 to 6, **characterised in that** the bearing metal layer (3) consists of a copper-aluminium, copper-tin, copper-tin-lead, copper-zinc, copper-zinc-silicon, copper-zinc-aluminium, aluminium-zinc or copper-aluminium-iron alloy.

8. Layered composite material according to any one of Claims 1 to 7 which has been subjected to an ageing process and comprises an interdiffusion layer substantially of bismuth and nickel between the nickel intermediate layer and the overlay.

9. Method for producing the layered composite material according to any one of Claims 1 to 8 by electrodeposition, in which the overlay is deposited from an aqueous-based electrolyte system of the following composition:
| | |
|---|---|
| bismuth methane sulphonate | 20 - 100 g/l |
| copper methane sulphonate | 0.1 - 30 g/l |
| and/or | |
| silver methane sulphonate | 0.1 - 2 g/l |
| methane sulphonic acid | 80 - 250 g/l |
| non-ionic wetting agent | 20 - 100 g/l |
| grain refining agent | 5 - 40 g/l |
| resorcinol | 1 - 4 g/l |
| when adding silver methane | |
| sulphonate additionally | |
| thiourea | 30 - 150 g/l. |

10. Method according to Claim 9, **characterised in that** the grain refining agent is based on an acrylic acid derivative and alkyl aryl polyglycol ether.

11. Method according to Claim 9 or 10, **characterised in that** the non-ionic wetting agent is based on aryl polyglycol ether and/or alkyl aryl polyglycol ether.

12. Production of plain bearings or bushes comprising the following steps:
applying a copper alloy or an aluminium alloy as the bearing metal layer to a backing layer;
separating and shaping the layered composite material;
applying a nickel intermediate layer to the bearing metal layer;
electrodepositing an overlay on the nickel intermediate layer according to the method according to Claims 9 to 11.

13. Production according to Claim 12, **characterised in that** the plain bearings or bushes are heat-treated for several hours up to several days.

14. Production according to Claim 13, **characterised in that** the temperature during the heat treatment is 150-170°C.

15. Use of the layered composite material according to Claims 1 to 8 as crankshaft main bearings.

16. Use of the layered composite material according to Claims 1 to 8 as connecting rod bearings, in particular in the big eye of the connecting rod.

## Revendications

1. Matériau composite laminaire, en particulier pour palier lisse ou manchon, comportant une couche de support, une couche métallique de palier (3) en alliage de cuivre ou alliage d'aluminium, une couche intermédiaire de nickel (2) et une couche de glissement (1), **caractérisé en ce que** la couche de glissement (1) est constituée d'environ 0 à 20 % en poids de cuivre et/ou d'argent et le reste de bismuth et l'épaisseur de couche de la couche de nickel est supérieure à 4 µm.

2. Matériau composite laminaire selon la revendication 1, **caractérisée en ce que** la couche de glissement (1) comprend au moins environ 0,5 % en poids de cuivre et/ou d'argent.

3. Matériau composite laminaire selon la revendication 1 ou 2, **caractérisé en ce que** la couche de glissement (1) est constituée d'environ 2 à 8 % en poids de cuivre et/ou d'argent et le reste de bismuth.

4. Matériau composite laminaire selon l'une des revendications 1 à 3, **caractérisé en ce que** l'épaisseur de couche de la couche de glissement (1) est d'environ 5 à 25 µm.

5. Matériau composite laminaire selon l'une des revendications 1 à 4, **caractérisé en ce que** l'épaisseur de couche de la couche de glissement (1) est d'environ 6 à 14 µm.

6. Matériau composite laminaire selon l'une des revendications 1 à 5, **caractérisé en ce que** l'épaisseur de couche de la couche de nickel (2) est d'environ 4 à 6 µm.

7. Matériau composite laminaire selon l'une des revendications 1 à 6, **caractérisé en ce que** la couche métallique de palier (3) est constituée d'un alliage de cuivre-aluminium, cuivre-zinc, cuivre-zinc-plomb, cuivre-zinc, cuivre-zinc-silicium, cuivre-zinc-aluminium, aluminium-zinc ou cuivre-aluminium-fer.

8. Matériau composite laminaire selon l'une des revendications 1 à 7, qui a été soumis à un processus de vieillissement et présente entre la couche intermédiaire de nickel et la couche de glissement, une couche d'interdiffusion constituée essentiellement de bismuth et de nickel.

9. Procédé de fabrication du matériau composite laminaire selon l'une des revendications 1 à 8 par dépôt galvanique dans lequel la couche de glissement est déposée à partir d'un système électrolytique sur la composition à base aqueuse ci-dessous :
| | |
|---|---|
| méthanesulfonate de bismuth | 20-100 g/l |
| méthanesulfonate de cuivre | 0,1-30 g/l et/ou |
| méthanesulfonate d'argent | 0,1-2 g/l |
| acide méthanesulfonique | 80-250 g/l |
| agent de réticulation non ionique | 20-100 g/l |
| agent d'affinement du grain | 5-40 g/l |
| résorcine | 1-4 g/l |
| avec addition de | |
| méthanesulfonate d'argent, en outre | |
| thiourée | 30-150 g/l |

10. Procédé selon la revendication 9, **caractérisé en ce que** l'agent d'affinement du grain est à base d'un dérivé d'acide acrylique et d'alkylarylpolyglycoléther.

11. Procédé selon la revendication 9 ou 10, **caractérisé en ce que** l'agent de réticulation non ionique est à base d'arylpolyglycoléther et/ou d'alkylarylpolyglycoléther.

12. Fabrication de paliers lisses ou de manchons comportant les étapes suivantes :
application d'un alliage de cuivre ou d'un alliage d'aluminium en tant que couche métallique de palier sur une couche de support ;
séparation et déformation du matériau composite laminaire,
application d'une couche intermédiaire de nickel su la couche métallique de palier ;
dépôt galvanique d'une couche de glissement sur la couche intermédiaire de nickel selon le procédé selon les revendications 9 à 11.

13. Fabrication selon la revendication 12, **caractérisée en ce que** le palier lisse ou le manchon sont soumis à un traitement thermique de plusieurs heures à quelques jours.

14. Fabrication selon la revendication 13, **caractérisée en ce que** la température du traitement thermique est de 150 à 170° C.

15. Utilisation du matériau composite laminaire selon les revendications 1 à 8 comme palier principal de vilebrequin.

16. Utilisation du matériau composite laminaire selon les revendications 1 à 8 comme palier de bielle, eu particulier dans le grand oeil de la bielle.
